(19) Europäisches Patentamt

European Patent Office

Office européen des brevets

(11) Publication number: **0 244 163 B1**

## EUROPEAN PATENT SPECIFICATION

(45) Date of publication of patent specification: **01.07.92**   (51) Int. Cl.5: **H01B** **13/14**, G01B 11/10

(21) Application number: **87303611.5**

(22) Date of filing: **24.04.87**

(54) **Apparatus for monitoring an object in a hostile environment.**

(30) Priority: **26.04.86 GB 8610274**

(43) Date of publication of application:
**04.11.87 Bulletin 87/45**

(45) Publication of the grant of the patent:
**01.07.92 Bulletin 92/27**

(84) Designated Contracting States:
**CH DE FR GB LI**

(56) References cited:
**EP-A- 0 153 721**
**US-A- 4 074 938**
**US-A- 4 158 508**

**Catalogue "Schaugläser" Pieterman Hard-
glas BV, Zoetermeer (NL)**

(73) Proprietor: **Beta Instrument Company Limited
Halifax House Halifax Road Cressex Indus-
trial Estate
High Wycombe Bucks., HP12 3SW(GB)**

(72) Inventor: **Tole, Walter Roland
Gracelands, Crowell Hill
GB-Chinnor, Oxon(GB)**

(74) Representative: **Allsop, John Rowland Euro-
pean Patent Attorney
10 London End
Beaconsfield, Bucks. HP9 2JH(GB)**

EP 0 244 163 B1

Rank Xerox (UK) Business Services

## Description

### FIELD OF THE INVENTION

The present invention relates to an apparatus for monitoring a travelling or stationary object in a hostile environment.

### BACKGROUND OF THE INVENTION

During the manufacture of high voltage cables it becomes necessary to coat the conductor of the cable with a plastics coating by an extrusion process.

This provides voltage insulation to the conductor for subsequent installation in cable ducts or a sea bed environment.

A peculiar phenomenon of high voltage transmission of electricity is the corona discharge effect

The corona effect would in normal circumstances impair, damage or completely destroy the standard insulating cable applied to electrical cables. In order to overcome the problem, a special semi-conductor insulant has been developed which is applied during manufacture by an extrusion process.

The special insulation process is known in the art as a vulcanising process, and necessitates that the insulation be applied under pressure by steam or other gas such as nitrogen, at an elevated temperature.

In this process it is a desired requirement that the cable dimension and position in the extrusion run be constantly monitored in order that the final product conforms to the manufacturers specification. This requires a non-contact technique because of the presence of the hostile environment in which curing of the special coating takes place.

Present methods of monitoring these parameters have proved to be ineffectual and are plagued with problems, due, amongst other things, to the build up of contamination which reduces the response capability of the apparatus employed.

To deal with these problems, a system is proposed in US 4 158 508 wherein the sight glass units incorporated in a non-contact measuring apparatus are provided with means to clean their inner surfaces (i.e. those subject to contamination within the chamber) in order to maintain a clear and unobstructed viewing of the cable as it passes through the sealed chamber between the sight glass units. The cleaning may be effected by a nozzle injecting a steam jet onto each inner glass surface.

### SUMMARY OF THE INVENTION

It is an object of the present invention to obviate the defficiences of the prior art.

According to one aspect of the present invention there is provided a visual inspection device for use in monitoring a coated cable passing through a containment chamber in which the coating is being cured in a hostile environment comprising a housing adapted to be attached to the chamber and having a passageway providing visual inspection of the interior of the chamber when the housing is mounted over an aperture provided in the chamber, a pair of optically transparent plates mounted in spaced relationship in the passageway and providing an hermetically sealed enclosure, characterised by the provision of first heating means mounted in the sealed enclosure and operable to prevent formation of condensation in the enclosure, and second heating means for controlling the temperature gradient between the housing and said chamber.

### BRIEF DESCRIPTION OF THE DRAWINGS

The invention will now be described by way of example with reference to the accompanying drawings wherein:

Figure 1 is a schematic view of an extrusion line for coating a cable, to illustrate the application of the invention;

Figure 2 is a cross-sectional view through a visual inspection device according to an embodiment of the invention for attachment to the extrusion line of Figure 1;

Figure 3 is a section of an extrusion line of the type shown in Figure 1 showing the installation of a pair of visual inspection devices of Figure 2 arranged on either side of the line and on an axis transverse to the direction of travel of the cable;

Figure 4 is a cross-sectional view along the line A-A of Figure 3 and wherein a measuring circuit is depicted employing the in-line visual inspection devices to determine position and dimension of the travelling cable; and

Figure 5 shows typical waveform outputs obtained by the measuring system shown deployed in Figure 4.

### BEST MODES OF CARRYING OUT THE INVENTION

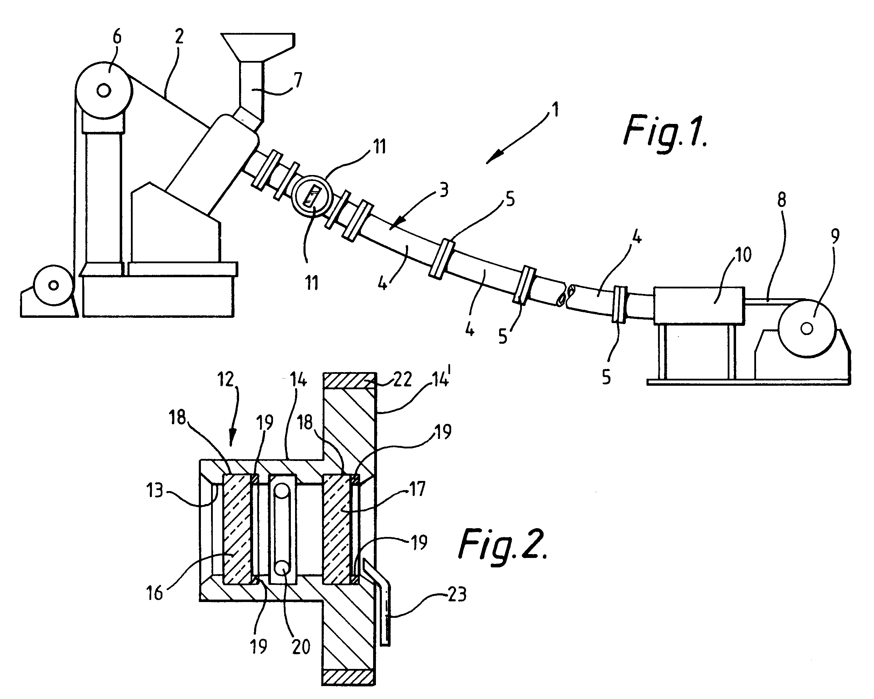

The extrusion line 1 shown in Figure 1, for applying a special plastic semi-conductor material to a cable 2, comprises a tubular catenary 3 through which is fed the cable 2 after being coated. The catenary 3 is made up of a number of hollow tubular sections 4 flange bolted together at 5 as shown.

In the drawing the catenary 3 is shown in an inclined position, but could be arranged vertically or horizontally depending upon the design of the associated equipment.

The cable 2 is fed from a drum 6 to an extruder 7 positioned at one end of the catenary 3, to emerge at the other end 8 of the catenary 3 provided with its special coating, to be wound on a take-up drum 9 after being cured in the extrusion run and finally cooled in chamber l0.

The cable 2, whilst in the catenery tube 3, is under high pressure and temperature, either in a steam, nitrogen for other pressurised gas atmosphere or a combination of these three media, in order for the curing process to take effect and produce the desired result.

During the extrusion process, it is necessary that the dimensions of the cable being coated and thus its position centrally of the catenary 3, is under careful control, in order that the final product conforms to manufacturers specification.

In a practical situation, measuring the cable dimension or diameter at an early stage in the coating process, is preferable since any imperfections or deviations from requirements will be detected quickly, and the process of extrusion adjusted either by changing the line speed or the output from the extruder 7.

There are systems in existence which have been devised to examine the position and dimension of the moving cable being coated in extrusion systems of the instant type, such as for example, by means of a single sight glass ll, as shown in Figure l, mounted to a tubular section of the catenary 3.

These existing systems however suffer from fogging and steaming, other contamination such as the presence of various particulate material inside the catenary, and the ever present risk of the sight glass cracking or breaking due to the high pressure and temperature inside the catenary leading to thermal stress.

The visual inspection device of the present invention, an embodiment thereof being shown more particularly in Figure 2, has been designed to overcome these problems and difficulties.

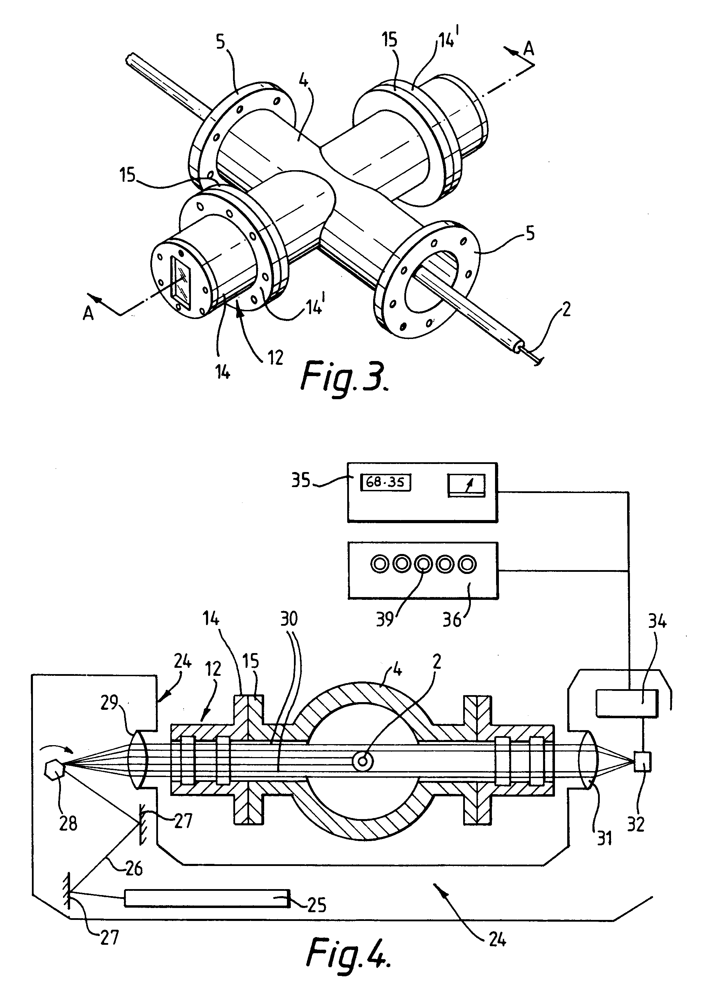

The visual inspection device shown in Figure 2, comprises a housing l2 having a central passageway l3 of circular cross-section. The housing is composed of a tubular portion l4 provided with an annular flange l4' for bolting to a corresponding annular flange l5 provided on a catenary tube section 4 of the extrusion line shown in Figure 3 when used to monitor the cable 2 passing through the tube 3, as will be explained later.

Two thick glass plates l6, l7, made of a special material to withstand the attendant high pressure and temperature, are mounted in spaced relationship in the central passageway l3, the peripheries of the glass plates being disposed in correspond-

ing annular groves l8 in the surface of the passageway l3, and held therein by high temperature seals l9.

A heater coil 20 is positioned between the two glass plates thereby to elevate the temperature in the sealed enclosure 2l between the plates l6 and l7 to a level at which condensation will not occur on the internal surfaces of the glass plates l6 and l7.

A contact band heater 22 is arranged around the periphery of the flange l4' in order to regulate the temperature of the complete assembly and bring it to the required operational level. By means of the band heater 22, it is possible to provide a temperature gradient as between the catenary tube section 4 and the temperature of the surrounding atmosphere, thus avoiding high temperature stress on the glass plates l6 and l7.
The operating temperature is dependent upon the temperature of the steam or other gases inside the catenary 3.

To enable the outer surface of the inner glass plate l7 to be purged of particulate dust or other contamination which may collect thereon, an injection tube 23 for high pressure gas is provided, both for this purpose and also to wipe away any droplets of water which may collect during the initial stages of control.

It will be seen from Figure 3, that two visual inspection devices of the type described with reference to Figure 2, may be mounted to either side of the catenary tube section 4, with their respective passageways l3 in axial alignment, to permit continuous measurements to be made upon the dimensions of the moving cable 2 within the catenary 3 by means of a measuring system as will be described with reference to Figure 4.

The measuring system comprises an optical gauge head 24 provided with a source 25 of laser energy. The beam 26 from the laser source 25 is reflected twice by means of mirrors 27 in its path of travel to a scanning mirror drum 28 which effects divergence of the beam onto a proximal lens 29. The lens 29 produces parallel beams 30 of laser light which are projected along the axially passageways l3 of the aligned visual inspection devices l2, to be eventually received on a distal lens 3l which acts to converge the beams 3 onto a photocell 32.

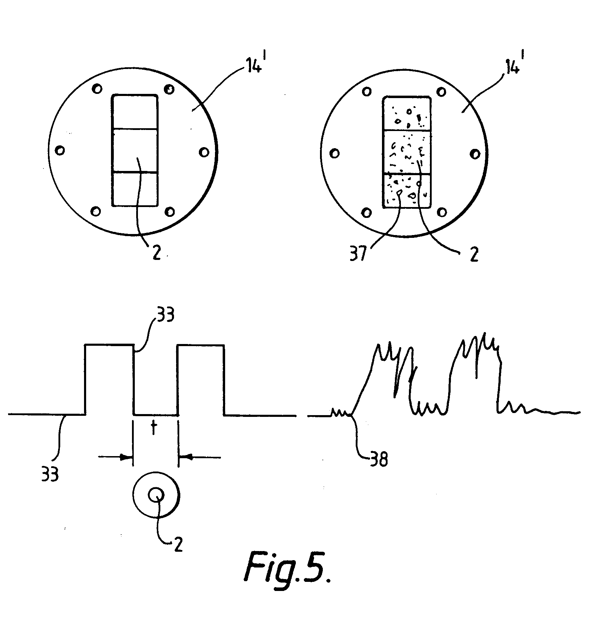

The laser beams 30 are intercepted by the moving cable 2 with its coated covering thereby to produce an electrical output of square wave 33 as shown in Figure 5 form by means of the operation of a conditioning circuit 34 coupled to the photocell 32.

The central part of the square wave formed over time 't' represents the dark portion of the cycle and is therefore proportional to the vertical dimension of the moving cable 2 with its coated material see Figure 5. The signal from the conditioning circuit 34 is fed to an indicator unit 35 which processes the square wave signals and produces a readout of dimension and position i.e. with reference to the cable travelling axially of the respective tubular section 4, of the cable inside the catenary 3, any deviation from said position being determined by variation in the amplitude of the positive and negative-going pulses of the square wave output from a reference co-ordinate axis.

In order further to enhance the operation of the system, a contamination detection circuit 36 is provided to monitor the cleanliness and optical condition of the sight glass in the visual inspection devices l2.

After operation of the system for a predetermined length of time, it is possible that contamination in the form of plastic chips, carbon drops, steam etching and the like will collect on the interior surface of the inner glass plates l7 to cause visual deterioration as exemplified in Figure 5 at 37.

When this occurs, the sharp profile of the square wave form will become distorted as shown at 38 in Figure 5, thus making it more difficult for the conditioning circuitry 34 to determine the actual portion of the waveform representing the dimensions of the cable.

When this occurs, the contamination detection circuit 36 examines the waveform and over a period of time establishes a table of results which by reference to the initial values in this table, the contamination detection circuit is able to determine with certainty the information required to provide a reliable output of the dimension of the moving cable.

There will however, come a time when the waveform will deteriorate to a level beyond which no intelligible information can be derived, and at this time the contamination detection circuit 36 will provide a visual warning signal which is used either to trigger the purge tube 23 into operation to clean the surface of the inner glass plate nearest the moving cable, or indicate that dismantling of the visual inspection devices should take place to effect the required cleansing.

To this end, the contamination detector circuit 36 is supplied with a series of warning lights 39 for instance, green for a serviceable condition, yellow lights for correct operation and red lights as indications that the equipment has reached complete unreliability.

## Claims

1. A visual inspection device for use in monitoring a coated cable passing through a containment chamber in which the coating is being cured in a hostile environment comprising a housing (12) adapted to be attached to the chamber and having a passageway (13) providing visual inspection of the interior of the chamber when the housing (12) is mounted over an aperture provided in the chamber, a pair of optically transparent plates (16, 17) mounted in spaced relationship in the passageway (13) and providing an hermetically sealed enclosure, characterised by the provision of first heating means (20) mounted in the sealed enclosure and operable to prevent formation of condensation in the enclosure, and second heating means (22) for controlling the temperature gradient between the housing (12) and said chamber.

2. A device as claimed in claim 1 wherein a purge tube (23) is provided and arranged operable to clean that surface of one of said transparent plates (17) facing the interior of said chamber.

3. A device as claimed in any preceding claim wherein said housing (12) is formed of a tubular portion (14) provided with an annular flange (14') for mounting to a corresponding annular flange (15) formed on the containment chamber.

4. A device as claimed in claim 3 wherein said second heating means (22) is in the form of a contact heater band attached around the periphery of the flange (14').

5. A monitoring system for determining the dimensions of a coated cable passing through a containment chamber in which the coating is being cured and comprising the use of a pair of visual inspection devices as claimed in any preceding claim arranged in-line across the containment chamber and transverse to the direction of travel of the cable (2) through the chamber, means (25, 27, 28, 29) providing a beam of optical radiation directed through said in-line inspection devices, and means (32, 34) responsive to interception of the beam by the coated cable to provide a signal (33) representative of the dimension and position of travel of the cable in the chamber.

6. A system as claimed in claim 5 wherein said beam of optical radiation is a laser beam (26).

7. A system as claimed in claim 5 or 6 wherein said responsive means includes contamination detection means (36) for determining the deviation of said signal from a predetermined value or quality corresponding to an unacceptable level of contamination on the transparent plates (16, 17) of said visual inspection devices and providing a visual ouput signal representative thereof.

8. A system as claimed in claim 7 wherein said visual output signal is used to trigger said purge tube (23) into operation.

9. A system as claimed in any one of claims 5 to 8 wherein said containment chamber is in the form of a catenary (3) comprised of a series of tubular sections (4) fastened together in assembly, a said pair of visual inspection devices being attached to a predetermined one of said tubular sections (4) respectively at each end of a diameter thereof, such that the axis of the passageway of each said inspection device lies on the said diameters.

10. A system as claimed in claim 9 wherein said beam is a parallel beam of radiation directed by a first lens (29) through the glass plate (16, 17) assemblies of one visual inspection device across the interior of the tubular section and received by a second lens (31) on the other side of said tubular section, and photocell means (32) for receiving a convergent beam of light provided by said second lens.

11. A system as claimed in claim 10 wherein the photocell output caused by said convergent beam is said signal representative of the dimensions and position of travel with respect to the axis of the tubular section, of the cable.

12. A system as claimed in claim 11 wherein said photocell output is fed to conditioning circuit means (34) for providing a square wave output from which can be determined the dimension and the said position of travel of the cable.

13. A system as claimed in claim 12 wherein said square wave output is fed to an indicator unit (35) providing a read-out of dimensions and the said position of travel of the coated cable in the catenary.

**Revendications**

1. Dispositif d'examen visuel à utiliser pour surveiller un câble enduit traversant une chambre formant enceinte à l'intérieur de laquelle l'enduit subit un traitement dans une atmosphère hostile comprenant un boîtier (12) prévu pour être fixé à la chambre et comprenant un passage (13) qui permet l'examen visuel de l'intérieur de la chambre quand la boîtier (12) est monté sur une ouverture ménagée dans la chambre, deux plaques transparentes à la lumière (16, 17) installées avec une certaine relation d'écartement à l'intérieur du passage (13) et formant une cellule étanche, caractérisé par l'installation d'un premier moyen de chauffage (20) monté dans la cellule étanche et ayant pour fonction d'éviter la formation de condensation dans la cellule, et un second moyen de chauffage (22) pour contrôler le gradient de température entre le boîtier (12) et ladite chambre.

2. Dispositif selon la revendication 1, dans lequel un tube d'évacuation (23) est installé et agencé pour permettre de nettoyer la surface de l'une desdites plaques transparentes (17) tournée vers l'intérieur de ladite chambre.

3. Dispositif selon l'une quelconque des revendications précédentes, dans lequel ledit boîtier (12) est constitué d'une partie tubulaire (14) portant une bride annulaire (14') destinée à être montée sur une bride annulaire correspondante (15) formée sur la chambre servant d'enceinte.

4. Dispositif selon le revendication 3, dans lequel ledit second moyen de chauffage (22) a la forme d'une bande chauffante par contact fixée sur la périphérie de la bride (14').

5. Système de surveillance pour déterminer les dimensions d'un câble enduit traversant une chambre formant enceinte dans laquelle l'enduit subit un traitement et comprenant l'emploi de deux dispositifs pour examen visuel selon l'une quelconque des revendications précédentes, disposés en alignement an travers de la chambre formant enceinte et perpendiculairement à la direction de passage du câble 2 à travers la chambre, des moyens (25, 27, 28, 29) délivrant un faisceau de rayonnement optique orienté à travers lesdits dispositifs d'examen alignés, et des moyens (32, 34) répondant à l'interception du faisceau par le câble enduit pour délivre un signal (33) représentatif de la dimension du câble et de sa position de traversée de la chambre.

6. Système selon la revendication 5, dans lequel ledit faisceau de rayonnement optique est un faisceau laser (26).

7. Système selon la revendication 5 ou 6, dans lequel ledit moyen de réponse comprend un moyen de détection de la contamination (36) pour définir l'écart dudit signal par rapport à une valeur ou qualité déterminée d'avance correspondant à un niveau inacceptable de contamination sur les plaques transparentes (16, 17) desdits dispositifs d'examen visuel et délivrant un signal de sortie visuel représentant cet état.

8. Système selon la revendication 7, dans lequel ledit signal visuel délivré sert à déclencher le fonctionnement dudit tube d'évacuation (23).

9. Système selon l'une quelconque des revendications 5 à 8, dans lequel la chambre formant enceinte a la forme d'une chaînette (3) constituée d'une série de tronçons tubulaires (4) reliés entre eux pour former l'ensemble, une dite paire de dispositifs d'examen visuel étant fixée à un tronçon prédéterminé desdits tronçons tubulaires (4) respectivement sur chaque extrémité d'un diamètre de ce tronçon, de manière que l'axe du passage de chacun desdits dispositifs d'inspection coïncide avec lesdits diamètres.

10. Système selon la revendication 9, dans lequel ledit faisceau est un faisceau de rayonnement parallèle orienté par une première lentille (29) pour traverser les ensembles de plaques de verre (16, 17) d'un dispositif d'examen visuel placé en travers à l'intérieur du tronçon tubulaire et ce faisceau étant reçu par une seconde lentille (31) montée de l'autre côté dudit tronçon tubulaire, et comprenant un moyen à cellule photosensible (32) pour recevoir un faisceau de lumière convergeante formé par ladite seconde lentille.

11. Système selon la revendication 10, dans lequel la sortie de la cellule photosensible créée par ledit faisceau convergent est ledit signal représentatif des dimensions et de la position du trajet du câble par rapport à l'axe du tronçon tubulaire.

12. Système selon la revendication 11, dans lequel ladite sortie de la cellule photosensible est appliquée à un moyen de circuit de conditionnement (34) destiné à délivrer en sortie une onde carrée d'après laquelle il est possible de déterminer la dimension du câble et ladite position de sa trajectoire.

13. Système selon la revendication 12, dans lequel ladite onde carrée délivrée est appliquée à un appareil indicateur (35) affichant une indication des dimensions et de ladite position de la trajectoire du câble enduit dans la chaînette.

**Patentansprüche**

1. Einrichtung zur visuellen Inspektion für die Verwendung bei der Überwachung eines beschichteten Kabels, welches durch eine Aufnahmekammer hindurchgeführt ist, in der die Beschichtung in einer aggressiven Umgebung ausgehärtet wird, bestehend aus einem Gehäuse (12), welches für eine Befestigung an der Kammer ausgebildet ist und einen Durchlaß (13) aufweist, der die visuelle Inspektion des Inneren der Kammer zuläßt, wenn das Gehäuse (12) über einer in der Kammer vorgesehenen Öffnung montiert ist, aus einem Paar von optisch durchscheinenden bzw. durchsichtigen Platten (16, 17), die voneinander beabstandet im Durchlaß (13) gehalten sind und einen hermetisch dichten Abschluß bilden, dadurch gekennzeichnet, daß erste Heizmittel (20) in dem dichten Abschluß angeordnet sind, und zwar für die Verhinderung der Bildung von Kondensat in diesem Abschluß, und daß zweite Heizmittel (22) zur Steuerung des Temperaturgradienten zwischen dem Gehäuse (12) und der Kammer vorgesehen sind.

2. Einrichtung nach Anspruch 1, dadurch gekennzeichnet, daß ein Reinigungsrohr (23) vorgesehen und für eine Reinigung der Oberfläche der einen der transparenten bzw. durchsichtigen Platten (17) angeordnet ist, die (Oberfläche) dem Inneren der Kammer zugewandt ist.

3. Einrichtung nach einem der vorhergehenden Ansprüche, dadurch gekennzeichnet, daß das Gehäuse von einem rohrförmigen Abschnitt (14) gebildet ist, welches mit einem ringförmigen Flansch (14') zum Montieren an einem entsprechenden ringförmigen Flansch (15) versehen ist, welch letzterer an der Aufnahmekammer ausgebildet ist.

4. Anordnung nach Anspruch 3, dadurch gekennzeichnet, daß die erwähnten zweiten Heizmittel (22) in Form eines Kontaktheizbandes ausgeführt sind, welches am Umfang des Flansches (14') befestigt ist.

5. Überwachungssystem für die Bestimmung der Abmessungen eines beschichteten Kabels, welches durch eine Aufnahmekammer hindurchgeführt ist, in der die Beschichtung ausgehärtet wird, wobei das System zwei visuelle Inspektionseinrichtungen nach einem der vorhergehenden Ansprüche aufweist, die (Einrichtungen) in Linie quer zur Aufnahmekammer sowie quer zur Bewegungsrichtung des Kabels (2) durch die Kammer angeordnet sind, Mittel (25, 27, 28, 29), die einen Strahl einer optischen Strahlung erzeugen, der durch die erwähnten in Linie angeordneten Inspektionseinrichtungen hindurchgeführt ist, sowie Ansprechmittel (32, 34), die auf die Beeinflussung des Strahles durch das beschichtete Kabel ansprechen, um ein Signal (33) zu erzeugen, welches abhängig ist von der Dimension sowie der Bewegungsposition des Kabels in der Kammer.

6. System nach Anspruch 5, dadurch gekennzeichnet, daß der Strahl der optischen Strahlung ein Laserstrahl (26) ist.

7. System nach Anspruch 5 oder 6, dadurch gekennzeichnet, daß die Ansprechmittel Mittel (36) zum Feststellen von Verunreinigungen aufweisen, um die Abweichung des erwähnten Signales von einem vorgegebenen Wert oder einer vorgegebenen Qualität festzustellen, die einen nicht akzeptierbaren Grad der Verunreinigung der lichtdurchlässigen Platten (16, 17) der visuellen Inspektionseinrichtungen entspricht, und um in Abhängigkeit hiervon ein visuelles Ausgangssignal zu erzeugen.

8. System nach Anspruch 7, dadurch gekennzeichnet, daß das visuelle Ausgangssignal zum wirksamen Schalten des erwähnten Reinigungsrohres (23) verwendet wird.

9. System nach einem der Ansprüche 5 bis 8, dadurch gekennzeichnet, daß die Aufnahmekammer die Form einer Kettenlinie (3) bestehend aus einer Serie von zu einer Anordnung miteinander verbundenen rohrförmigen Abschnitten aufweist, daß das erwähnte Paar von visuellen Inspektionseinrichtungen an einem Vorbestimmten der erwähnten rohrförmigen Abschnitte (4) bzw. an jeweils einem Ende eines Durchmessers hiervon vorgesehen ist, und zwar derart, daß die Achse des Durchlasses jeder Inspektionseinrichtung auf den Durchmessern liegt.

10. System nach Anspruch 9, dadurch gekennzeichnet, daß der erwähnte Strahl ein paralleler Strahl ist, der über eine erste Linse (29) durch die Glasplattenanordnung (16, 17) einer visuellen Inspektionseinrichtung durch das Innere des rohrförmigen Abschnittes gerichtet ist und von einer zweiten Linse (31) an der anderen Seite des Rohrabschnittes aufgenommen wird, und daß Fotozellenmittel (32) zur Aufnahme eines konvergierenden Lichtstrahles, der durch die zweite Linse erzeugt wird, vorgesehen sind.

11. System nach Anspruch 10, dadurch gekennzeichnet, daß das Ausgangssignal der Fotozelle, welches durch den konvergenten Strahl erzeugt wird, dasjenige Signal ist, welches den Abmessungen sowie der Bewegungsposition des Kabels entspricht, und zwar in bezug auf die Achse des rohrförmigen Abschnittes.

12. System nach Anspruch 11, dadurch gekennzeichnet, daß das erwähnte Ausgangssignal der Fotozelle Schaltkreismitteln (34) zur Konditionierung zugeführt wird, um ein Ausgangssignal in Form einer Rechteckwelle bzw. eines Rechtecksignals zu erzeugen, aus dem die Abmessung und die Bewegungsposition des Kabels bestimmt werden können.

13. System nach Anspruch 12, dadurch gekennzeichnet, daß das rechteckförmige Ausgangssignal einer Anzeigeeinrichtung (35) zugeführt wird, die eine Ausgabe der Abmessungen und der Bewegungsposition des beschichteten Kabels in der kettenlinienartigen Anordnung wiedergibt.

Fig.1.

Fig.2.

EP 0 244 163 B1

Fig.3.

Fig.4.

Fig.5.